(19) Europäisches Patentamt
European Patent Office
Office européen des brevets

(11) **EP 2 458 329 A2**

(12) **EUROPEAN PATENT APPLICATION**

(43) Date of publication:
**30.05.2012 Bulletin 2012/22**

(51) Int Cl.:
**G01C 21/16** *(2006.01)*    **G01C 21/00** *(2006.01)*

(21) Application number: **11190423.1**

(22) Date of filing: **23.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.11.2010 US 953565**

(71) Applicant: Honeywell International, Inc.
**Morristown, NJ 07962-2245 (US)**

(72) Inventors:
• **Ma, Yunqian**
**Morristown, NJ New Jersey 07962-2245 (US)**
• **Hesch, Joel**
**Morristown, NJ New Jersey 07962-2245 (US)**

(74) Representative: **Buckley, Guy Julian**
**Patent Outsourcing Limited**
**1 King Street**
**Bakewell**
**Derbyshire DE45 1DZ (GB)**

(54) **A system for constructing distance estimate models for personal navigation**

(57)    Systems for constructing distance estimate models for personal navigation are provided. In one embodiment, a distance estimation system comprises: a gait information memory configured to store gait information about a gait mode; a biometric data memory configured to store a biometric profile for a user; a frequency module configured to identify a gait frequency; and a distance calculation module configured to calculate the distance traveled by the user by creating a distance estimate model based on the gait mode, the biometric profile, and the gait frequency, wherein the distance calculation module creates the distance estimate model by performing a regression analysis on movement information from at least one user.

PERSONAL NAVIGATION SYSTEM
300

DISTANCE ESTIMATION SYSTEM
100

STRAPDOWN NAVIGATOR
302

KALMAN FILTER
306

IMU
308

AIDING SENSORS (OPTIONAL)
316

MAGNETIC SENSORS
318

ALTIMETER
320

GPS
322

GAIT CLASSIFICATION MODULE
304

GAIT MODEL LIBRARY
310

GAIT ESTIMATOR
314

FREQUENCY ESTIMATOR
312

FIG. 3

EP 2 458 329 A2

**Description**

**BACKGROUND**

The safety and efficiency of coordinating teams, such as firefighters and first responders working in complex and dynamic environments, can be significantly enhanced through situational awareness (SA). A key challenge in SA is determining the position and orientation (pose) of individuals with respect to a common frame of reference, which helps coordinate the actions of team members. A common approach is to use the Global Positioning System (GPS) satellite network to track each person's location. Unfortunately, the most challenging emergency scenarios often occur in areas that preclude the use of GPS due to partial or total signal disruption and multi-path effects (for example, inside buildings, in mines and caves, underwater, or in an urban canyon). When GPS is unavailable, personal navigation solutions based on inertial measurements from a body-mounted inertial measurement unit (IMU) can provide position and orientation information. However, unaided IMU-based personal navigation solutions quickly accumulate errors due to the integration of both sensor noise and bias. One method for aiding an IMU-based personal navigation solution is to incorporate other sensors (for example, a compass) into the personal navigation system. However, the incorporation of other sensors increases the size, weight, power requirements, and complexity of the navigation platform.

For the reasons stated above and for other reasons stated below which will become apparent to those skilled in the art upon reading and understanding the specification, there is a need in the art for improved systems and methods for constructing distance estimate models for personal navigation.

**SUMMARY**

The Embodiments of the present invention provide methods and systems for constructing Distance Estimate Models for personal navigation and will be understood by reading and studying the following specification.

In one embodiment, a distance estimation system comprises: a gait information memory configured to store gait information about a gait mode; a biometric data memory configured to store a biometric profile for a user; a frequency module configured to identify a gait frequency; and a distance calculation module configured to calculate the distance traveled by the user by creating a distance estimate model based on the gait mode, the biometric profile, and the gait frequency, wherein the distance calculation module creates the distance estimate model by performing a regression analysis on movement information from at least one user.

**DRAWINGS**

Embodiments of the present disclosure can be more easily understood and further advantages and uses thereof more readily apparent, when considered in view of the description of the preferred embodiments and the following figures in which:

Figures 1A and 1B are respectively a block diagram and flow chart for an exemplary distance estimation system of one embodiment of the present invention;

Figure 2 is a flowchart of an exemplary method for acquiring training data of one embodiment of the present invention;

Figure 3 is a block diagram illustrating an exemplary personal navigation system of one embodiment of the present invention;

Figure 4 is a flowchart of an exemplary method of one embodiment of the present invention;

Figure 5 is a flowchart of an exemplary method of one embodiment of the present invention;

Figure 6 is a block diagram of an extended Kalman filter framework of one embodiment of the present invention; and

Figure 7 depicts an example of accelerometer data for a person walking in one embodiment of the present invention.

In accordance with common practice, the various described features are not drawn to scale but are drawn to emphasize features relevant to the present disclosure. Reference characters denote like elements throughout figures and text.

## DETAILED DESCRIPTION

In the following detailed description, reference is made to the accompanying drawings that form a part hereof, and in which is shown by way of specific illustrative embodiments in which the present disclosure may be practiced. These embodiments are described in sufficient detail to enable those skilled in the art to practice the present disclosure, and it is to be understood that other embodiments may be utilized and that logical, mechanical, electrical, and method changes may be made without departing from the scope of the present disclosure. The following detailed description is, therefore, not to be taken in a limiting sense. Further, the various sections of this specification are not intended to be read in isolation but considered together with the teachings of the written description as a whole.

IMU based personal navigation systems typically accumulate errors during operation due to integration of both noise and sensor bias. Embodiments of the present disclosure provide a distance estimation system derived from human gait models, which can reduce personal-navigation-system pose errors by constraining the estimated motion of a person. A human gait model defines the body motion as a function of parameters, such as gait mode, frequency, and biometric information. These models are employed to supply distance measurements to an estimator (for example, an extended Kalman filter) to reduce the errors that arise in an IMU-based personal navigation system.

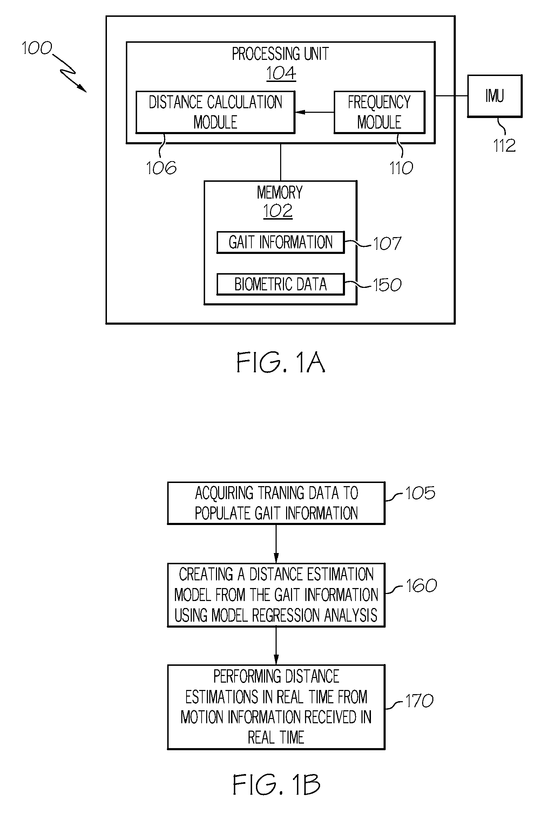

Figure 1A is a block diagram of a distance estimation system 100 for estimating the distance traveled by a user. Distance estimation system 100 includes a memory 102 configured to store information used by distance estimation system 100. Memory 102 includes a biometric data 105 which includes biometric information about one or more individual persons who will use a device in which distance estimation system 100 is utilized. The phrase "biometric information," as used herein, includes information that describes an individual's physical characteristics. For example, biometric information includes height, leg length, thigh length, arm length, weight, gender, and the like. As people exhibit different gait patterns, biometric data 105 can parameterize the gait variations among individuals.

Memory 102 also includes gait information 107. Gait information 107 includes details about a person's gait while the person is moving. The terms "gait" and "gait mode," as used herein, generally refer to the pattern of movement of a user's limbs while moving from one location to another. Thus, gait information 107 stores data indicating a pattern of repetitive limb movements. Exemplary gaits represented in gait information 107 include, but are not limited to, level walking, stair ascending/descending, side-shuffle walking, duck (firefighter) walking, hand-and-knee crawling, military (elbow) crawling, jogging, running, and sprinting. In one embodiment, a user enters a gait mode directly into gait information 107. In an alternative embodiment, a gait classifier system uses an algorithm to determine the gait of a user. For example, a system and method for wavelet-based gait classification can be found in U.S. Patent application number 12/900315, filed October 7, 2010, which is herein incorporated by reference.

Distance estimation system 100 also includes a processing unit 104. Processing unit 104 employs the information contained in memory 102 to calculate the distance traveled by a person using distance estimation system 100. Processing unit 104 includes a frequency module 110 configured to determine a gait frequency from observations of an individual's motion. The term "frequency," as used herein, generally refers to the number of repetitive gait motions per unit of time. In one example, the frequency of level walking refers to how many steps or are repeated per second, or equivalently, the inverse of the time duration of each step. For instance, an individual who takes two steps every second, has an associated frequency of 2 Hz. In one embodiment frequency module 110 applies a Fourier analysis (such as, but not limited to a Fast-Fourier Transform (FFT)) to motion information received from an IMU 112 that is coupled to processing unit 104. Using the Fourier analysis, frequency module 110 identifies a dominant frequency, a group of frequencies, or an identifying frequency pattern, from the motion information. Based on this initial estimate of the gait frequency, individual step times are computed accurately using the time-difference between detected critical points in the raw IMU 112 data signals. In some embodiments, the critical points are peaks, valleys, or zero-crossings (for example, time instants of highest, lowest, or zero acceleration during the gait cycle).

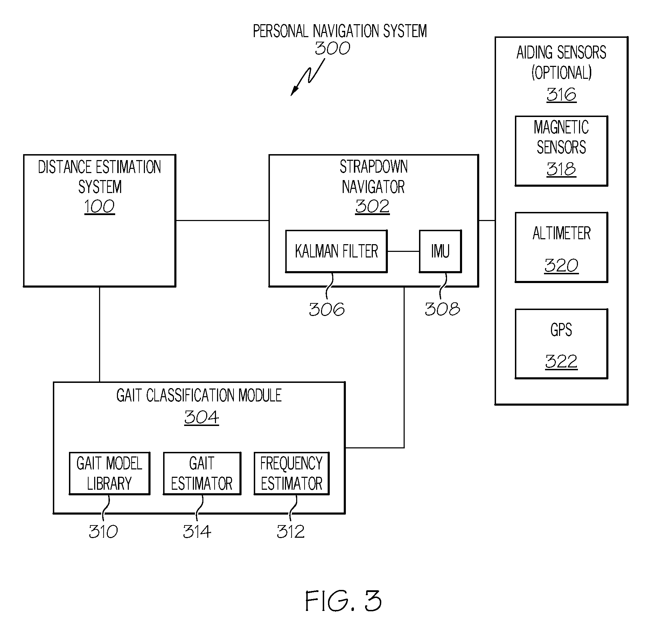

In one embodiment, frequency module 110 directly monitors the frequency of the corresponding gait. Alternatively, frequency module 110 receives the frequency estimate for the current gait from external instrumentation such as described in greater detail in Figure 3 below. For example, in one embodiment, a navigation processor provides information that indicates the frequency of a gait mode. Alternately, other dedicated instrumentation like a gait classification module provides information about the frequency. In yet other embodiments, a user can directly instruct frequency module 110 about the frequency of a gait.

In at least one embodiment, distance estimation system 100 includes distance calculation module 106. Distance calculation module 106 uses the data contained in memory 102, which contains gait information 107 and biometric data 105, along with data received from frequency module 110 to calculate the distance traveled by a user. To calculate the distance traveled by a user of distance estimation system 100, distance calculation module 106 creates a distance estimate model. Distance calculation module 106 develops the distance estimate model by performing a regression analysis on acquired training data.

As illustrated in Figure 1B, three distinct phases are involved in training and operating distance estimation system 100. These phases include a first phase illustrated at 150 which comprises acquiring training data to populate gait information 107. The second phase illustrated at 160 comprises creating a distance estimation model from the gait information using model regression analysis. Finally, the third phase, illustrated at 170, is the operating phase comprising performing distance estimations in real time from motion information received in real time.

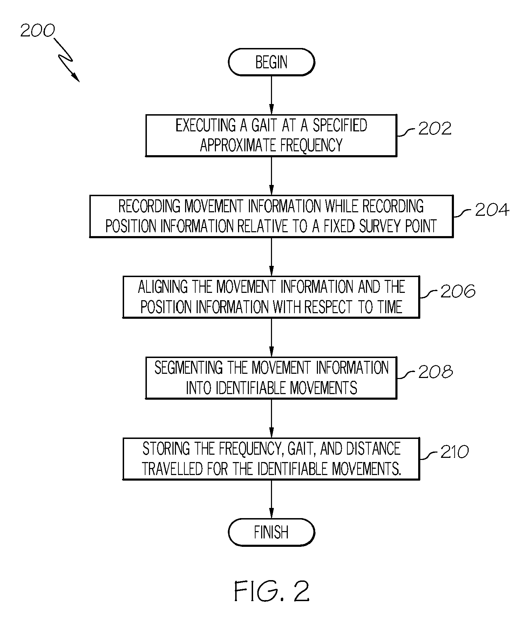

Figure 2 is a flowchart of an exemplary method 200 for the first phase 150. This phase involves acquiring training data that will be used in the next phase to perform gait model regression analysis. For example, the distance estimation system 100 functions as a gait data collector to collect the training data. Method 200 begins at 202 with executing a gait at a specified approximate frequency. For example, in one embodiment, a user will walk in a straight line while approximately taking one step every second. Further, frequency module 110 determines the precise frequency of the user. Information for other gait modes can also be collected. For example, in one embodiment, training data is collected as a user crawls in a straight line while completing a full cycle of movements once every three seconds, or as a user shuffles sideways or moves in another identifiable gait.

In certain embodiments, while a user executes the gait, method 200 proceeds at 204 with memory 102 recording the movement information while recording position information relative to a fixed survey point. For example, a user wears an IMU 112 that provides movement information indicating motions taken by the user during the execution of a gait. Gait information 107 in memory 102 stores the movement information. While the movement information is collected, data estimation system 100 records the test subject's distance from a fixed survey point. For example, in one embodiment, when training data is acquired indoors or where GPS is unavailable, a laser range finder is located at a known survey location. As the user moves, the laser range finder generates information about the user's position in relation to the survey point and transmits the generated information to distance estimation system 100. In another embodiment, when the training data is acquired outdoors or where GPS is available, differential GPS signals are used to measure high resolution, high accuracy trajectories for a user while they move. The distance to all of the points along the trajectory are measured from the initial reference location using differential GPS. After the movement information and the position information are collected, gait information 107 functions as a movement information recorder and stores the motion information and the position information in memory 102.

After gait information 107 stores the position and movement information in memory 102, method 200 proceeds at 206 by aligning the movement information and the position information with respect to time. Distance calculation module 106 time-aligns the data by correlating the position information and the movement information such that a movement in the movement information and a position in the position information correspond to the actual movement and position of the user at a particular time instant. That is, distance calculation module 106 retrieves the gate information 107 identifies measurement information data points and position data points that correspond in time with each other. For example, during the recording of the movement and the position of the user, if the user was taking his second step when at a position of one meter, then the aligning correlates this information.

Method 200 proceeds at 208 with the segmenting of the movement information into identifiable movements. The phrase "identifiable movements," as used herein, generally refers to a recognizable segment of a gait cycle of a full gait cycle. For example, when the user is walking, distance calculation module 106 functions as a data segmentation module and splits the movement information into identifiable movements by separating the movement information into a series of individual steps (for example, a series of data corresponding to ten walking steps is split into ten individual series of data, each corresponding to one walking step). Alternatively, when the user is crawling, distance calculation module 106 divides the movement information into both a series of hand movements and leg movements, each of which could comprise an identifiable movement.

After the movement information is segmented into identifiable movements, method 200 proceeds at 210, with storing the frequency, gait, and distance traveled for the identifiable movements into memory 102. Distance calculation module 106 recognizes each identifiable movement and saves into gait information 107 the frequency of the movements during the period of time associated with the identifiable movement, the distance the user traveled during the identified movement, and the gait mode for the identifiable movement. For example, if a person was taking one step every second, traveled one meter per step, and was walking; distance calculation module 106 stores in memory 102, a frequency of one 1 Hz, a distance of one meter, and a gait mode of "walking".

Repeating method 200 by having multiple users perform method 200 multiple times for a plurality of gaits provides training data for distance estimation system 100. This training data provides the basis for the distance estimation system 100 to perform a regression analysis for the plurality of gaits. For example, an individual repeats method 200 for several different gaits including duck walking, walking, running, crawling, and the like. The individual also repeats each gait at different frequencies. For instance, an individual walks slowly at a frequency of .5 Hz, at a medium pace of 1 Hz, and a brisk pace of 2 Hz. Furthermore, multiple individuals representing a multiplicity of different body types can repeat method 200 multiple times at multiple frequencies. The training data representing multiple gaits executed at multiple frequencies by users with differing body types spans the input the space. The training data should have sufficient sample size in order to fulfill the required accuracy requirements of the regression analysis.

After the gait information 107 has been gathered, the second phase 160 begins where distance calculation module 106 creates a distance estimate model based on a regression analysis of the gathered gait information as represented by the following equation:

$$d = g(m, f, b)$$

where the distance *d* is calculated as a function *g* of the gait mode *m*, the frequency of the gait mode *f*, and the biometric information *b* of the individual executing the gait. For a particular gait mode, such as walking, crawling, or shuffling, the equation is represented by the following:

$$d_m = g_m(f, b)$$

The distance for a particular gait mode $d_m$ is a function $g_m$ of the frequency of the gait mode *f* and the biometric information *b* of the individual executing the gait. That is, distance calculation module 106 creates the distance estimate model, represented by functions *g* and $g_m$. The specific forms of *g* and $g_m$ depend on the regression analysis method employed that may include global regression (for example, polynomial fitting), as well as local regression, and local-adaptive regression.

In one embodiment, distance calculation module 106 creates the distance estimate model using the training data gathered through method 200 represented by the following equation:

$$(x_i, y_i), i = 1, ..., n$$

where n is the number of gathered points in the training data, and x is an input vector. The value $y_i$ is an output scalar representing the known distance traveled for an identifiable movement. The value *y* is approximated by:

$$y = t(x, w) + noise$$

where x is the input vector, y is the output scalar, t(x, w) is the target function, w is a parameter vector, and the noise follow a known distribution. Since both the input x and the parameter w can have more than one variable, we employ the vector representations for x and w.

For example, in one embodiment, distance calculation module 106 creates the distance estimate model using a linear model for a particular person and for a particular gait. For example, the linear model represents a particular individual using a walking gait. In an embodiment of a linear model that does not depend on biometric information, the target function for the distance estimate model is:

$$g(f) = w_0 + w_1 * f$$

Distance calculation module 106 estimates the coefficient values $w_0$ and $w_1$, based on the available training data, to achieve the smallest value of the error function. The coefficients are calculated using a least-squares formulation of the regression problem and, as such, the $w_0$ and the $w_1$ are found by minimizing the following cost function:

$$\sum_{i=1}^{n} [y_i - g(f_i)]^2$$

where $y_i$ is the known distance traveled. Alternatively, instead of minimizing the error represented by a least-squares cost function, a least-modules loss minimizes the error.

In another embodiment, distance calculation module 106 represents the distance estimate model as a quadratic regression model. For example, distance calculation module 106 uses a quadratic regression model for a particular person executing a particular gait which does not depend on biometric information. The following equation represents a quadratic regression model:

$$g(f) = w_0 + w_1 * f + w_2 * f^2$$

Both the linear model and the quadratic model belong to a family of polynomial approximations represented by the following equation:

$$g(f) = \sum_{i=0}^{n} (w_i * f^i)$$

The target function is determined by solving for the coefficients $w_i$, which can be computed in closed form using normal equations.

In a further embodiment, distance calculation module 106 creates a distance estimate model that applies to multiple people. For example, distance calculation module 106 creates a distance estimate model that calculates the distance traveled as a function of frequency and as a function of biometric information for a particular individual. By including biometric information, the polynomial regression for both frequency f and biometric information b is represented by either of the following equations:

$$y = w_0 + w_1 * f + w_2 * f^2 + w_3 * b,$$

$$y = w_0 + w_1 * f + w_2 * f^2 + w_3 * b + w_4 * b^2$$

The distance estimate models represented with polynomials are examples of global regression models. In a global regression model, a set of coefficients $\{w_0, w_1, \dots, w_n\}$ is used to parameterize a polynomial that approximates the full set of training data acquired in method 200.

In an alternative embodiment, distance calculation module 106 creates the distance estimate model using a local regression method, where the local regression method finds different distance models to fit subsets of the information gathered in method 200. In one embodiment for a local regression method, distance calculation module 106 creates the distance estimate model using a kernel-based method. The distance estimate model uses a kernel method of the following form:

$$f(x) = \sum_{i=1}^{n} K_i(\mathbf{x}, \mathbf{x}_i) y_i$$

where the kernel function $K_i(\mathbf{x}, \mathbf{x}_i)$ is a symmetric function that satisfies the following properties: $K(\mathbf{x}, \mathbf{x}') \geq 0$

Nonnegative $K(\mathbf{x}, \mathbf{x}') = K(\|\mathbf{x} - \mathbf{x}'\|)$ Radially symmetric $K(\mathbf{x}, \mathbf{x}) = max$ max Takes on its maximum when x = x' $\lim_{t \to \infty} K(t) = 0$    Monotonically decreasing with $t = \|\mathbf{x} - \mathbf{x}'\|$

In a further embodiment of a local regression method, distance calculation module 106 includes a normalization term in the kernel method. The addition of the normalization term converts the kernel method to a Nadaraya-Watson kernel regression model, as shown below:

$$f(x) = \sum_{i=1}^{n} \frac{K_h(\mathbf{x}, \mathbf{x}_i)}{\sum_{j=1}^{m} K_h(\mathbf{x}, \mathbf{x}_j)} y_i$$

Alternatively, distance calculation module 106 creates the distance estimate model using a local adaptive approach. In the local adaptive approach, for a given width parameter $\alpha$, the local empirical risk for the estimation point $x_0$ is:

$$Loss_{local-adaptive}(\omega) = \frac{1}{n}\sum_{i=1}^{n} K_\alpha(\mathbf{x}_i, \mathbf{x}_0)(y_i - f(\mathbf{x}_i, \omega))^2.$$

For example, for a set of approximating functions $f(\mathbf{x}, w_0) = w_0$, the distance estimate model becomes a zero-order model over the width. When the approximating function is a linear function, the distance estimate model is represented by a series of piecewise linear functions. In the local adaptive approach, for each kernel width, the input parameters are based on a small subset of training data gathered in method 200 in the neighborhood of sample point $x_0$.

In certain embodiments, the regression analysis used to perform the selection is chosen based on performance requirements. For example, where there is limited processing capability, distance estimation system 100 creates a distance estimate model using linear regression. In contrast, in situations where a user desires precision in place of speed, distance estimation system 100 creates a distance estimate model using a local regression method. A cross validation method can be used to select a regression model. In the cross validation method, a part of the training data is used to generate different regression models, the rest of the training data is then used as validation data to compare against the generated regression models to determine which regression model provides the best performance.

After distance calculation module 106 completes the second phase at 160 and develops a distance estimate model for the training data acquired in method 200, distance calculation module 106 is ready for the operational phase 170. In this phase, distance calculation module 106 uses the distance estimate model to calculate the distance traveled by a user without requiring further training data from a user. Since the training data comprises data from a wide variety of subjects executing various gaits and different frequencies, additional users can use the trained models without having to generate any training data of their own. For example, after the gait models are computed an additional user employs distance calculation module 106 after pre-entering his biometric information to calculate his distance traveled. A second user then uses the same distance calculation module 106, by pre-entering her biometric information, traveling, and calculating her distance traveled. Both users employ distance estimation system 100 without training distance calculation module 106 to their particular mode of movement.

Figure 3 is a block diagram illustrating an exemplary embodiment of a personal navigation system 300 implementing distance estimation system 100. Personal navigation system 300 includes a navigation processor 302, an IMU 308, and a Kalman filter 306. IMU 308 includes a series of gyroscopes and accelerometers that measure the motion of personal navigation system 300. For example, IMU 308 includes three mutually orthogonal linear accelerometers and three mutually orthogonal gyroscopes that provide six channels of data. As IMU 308 detects the motion of personal navigation system 300, IMU 308 transmits the motion information to navigation processor 302. Furthermore, the gait classification module 304 executes continuously in parallel, to determine when a step occurs so that a distance traveled estimate can be computed. After each detected step, the distance estimation system 100, in connection with a personal navigation system, corrects errors that arise during the integration of the IMU 308 data. In a further embodiment, personal navigation system 300 receives navigational information from aiding sensors 316. Aiding sensors 316 includes a magnetic sensors 318, an altimeter 320, and a GPS 322. The aiding sensors 316 also provide corrective information to IMU 308.

Navigation processor 302 uses the motion information received from IMU 308 to create a navigation solution. The navigation solution contains information regarding position, velocity, heading, and attitude. Navigation processor 302 transmits the navigation solution and motion information to a gait classification module 304. Furthermore, during operation of personal navigation system 300, integration of the IMU 308 noise and biases cause the navigation solution to drift away from the true navigation solution. To correct the "drift," the navigation processor receives corrective data from Kalman filter 306. Kalman filter 306 receives information and compensates for the errors that arise as a result of "drift". For instance, Kalman filter 306 computes corrections based on a measurement of the distance traveled provided by the distance estimation system 100. Alternatively, Kalman filter 306 receives updating information from GPS, altimeters, magnetic sensors and the like.

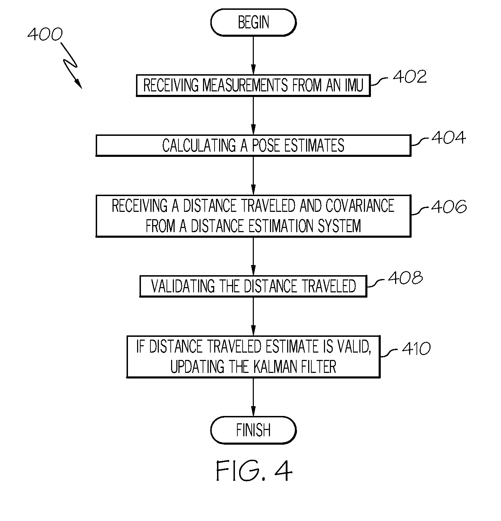

Figure 4 is a flowchart of an exemplary method 400 for updating Kalman filter 306 using the distance traveled received from distance estimation system 100. Method 400 begins at 402 with navigation processor 302 receiving measurements from IMU 308. For example, navigation processor 302 receives both acceleration and rotational velocity measurements from IMU 308. Method 400 proceeds at 404 with navigation processor 302 calculating a pose estimate based on the integration of the inertial measurements received from IMU 308.

Method 400 proceeds at 406 with Kalman filter 306 receiving a distance traveled from distance estimation system 100, as well as a covariance or measure of uncertainty for the measured distance. Kalman filter 306 uses the distance traveled to correct errors which will improve the accuracy and reduce the uncertainty of the inertial-based pose estimate from IMU 308. The inertial-based pose estimate is computed at a high rate in order to obtain estimates for position, velocity, and attitude. In one embodiment the distance traveled is a scalar measurement represented by:

$$d = h(g, f, b)$$

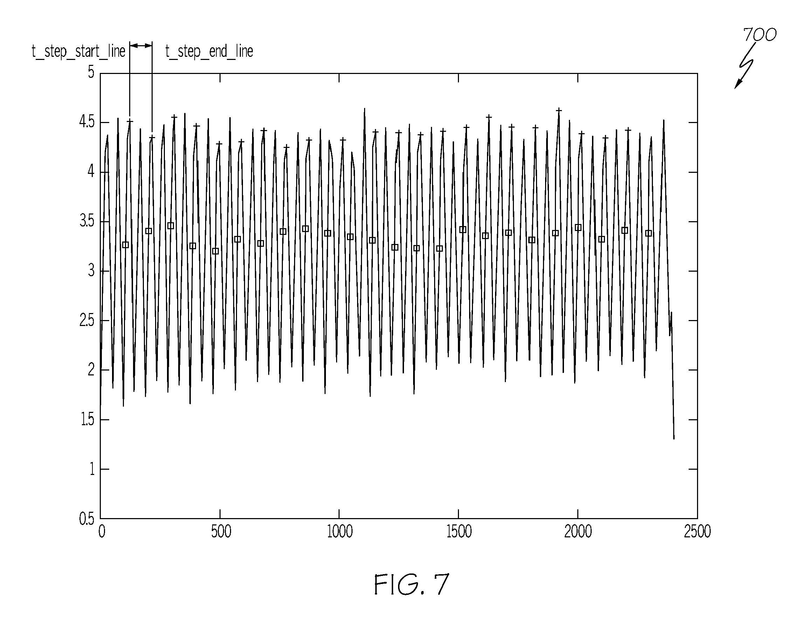

which is the magnitude of the measured step (where $g$ is the gait, $f$ is the frequency, and $b$ represents biometric data). The frequency estimate is obtained using "step-segmentation", where the frequency is computed as $1/(t\_step\_end\_time - t\_step\_starting\ time)$, based on the detected critical points in the raw IMU data. The step-start and step-stop times are computed using critical point detection on the raw signal received from the IMU. Figure 7 depicts generally at 700 an example accelerometer signal recorded during a walking phase. The step-start and step-stop times are computed using critical-point detection on the raw signal. In another embodiment the measurement is a vector expressing the difference in position (or average velocity) of the step as compared to the previous step represented by:

$$\Delta p = p_k - p_{k-1} = q(g, f, \phi, b)$$

where $p_k$ denotes the position of the sensing package at time step $k$ and $\phi$ represents the heading of personal navigation system 300. Measurement updates are computed using standard extended Kalman filter update equations. For example, pose estimates are updated using distance measurements in an extended Kalman filter framework. To update the pose estimates, a linearized measurement model is derived, the Kalman gain is computed, and the corrections of the state estimates are calculated along with an updated covariance.

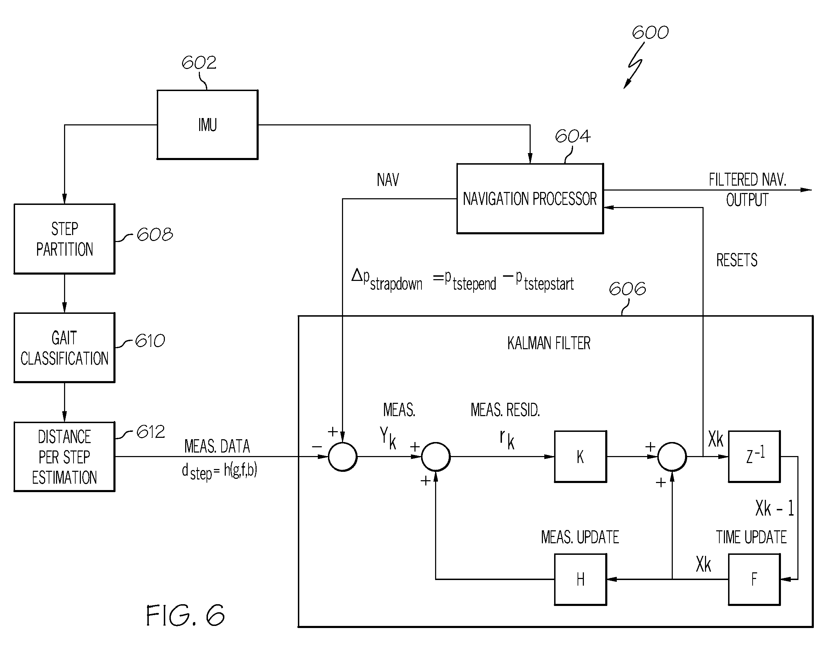

Figure 6 is a block diagram of a Kalman filter framework 600 for updating the Kalman filter with distance estimates. The Kalman filter framework 600 includes an IMU 602, a navigation processor 604, a Kalman filter 606, a step partition 608, a gait classification 610, and a distance per step estimation 612. In Kalman filter framework 600, IMU 602 provides motion information to the both navigation processor 604 and step partition 608. Navigation processor 604 outputs a navigation solution. Step partition 608 separates the motion information received from IMU 602 into partitioned motion information and transmits the partitioned motion information to gait classification 610. Gait classification 610 classifies the partitioned motion information into an identifiable gait and transmits gait and frequency information to distance per step estimation 612. Distance per step estimation 612 then uses the gait information, the frequency and biometric information to calculate a distance estimate. Distance per step estimation 612 then transmits the distance estimate to Kalman filter 606. Kalman filter 606 derives a linearized measurement model by computing the Jacobian, H with respect to the state of the system, the Kalman gain K, and the corrections to the state estimates along with an updated covariance. Kalman filter 606 uses the linearized measurement model to reset the navigation processor 604 and correct errors that have developed during operation.

Method 400 proceeds at step 408 with Kalman filter 306 validating the distance traveled. In most measurement schemes, it is possible that the observed quantity either belongs to the set of valid measurements (i.e., measurements which admit a distribution around the true value), or the measurement may be an outlier (i.e., a spurious value which is unrelated to the true measured quantity). For this reason, an outlier rejection step is performed to ensure that only valid measurements are incorporated into the Kalman filter 306 as updates. For example, Kalman filter 306 performs outlier rejection by applying a statistical test to the distance traveled measurement in order to determine the validity of the measurement received from distance estimation system 100. In at least one embodiment, the statistical test takes the form of a Mahalanobis distance test which computes the probability that the measurement residual error (that is, the difference between the received measurement and the expected measurement computed from the inertial-based pose estimate) follows a chi-squared distribution, which corresponds to the probability that the measurement is valid. While in other instantiations, the statistical test can take a variety of other forms. If the statistical test determines that the distance traveled is valid, then method 400 proceeds at 410 with Kalman filter 306 updating with the distance traveled. For instance, after the distance traveled has passed the statistical test, then a series of standard Kalman filter equations can use the distance traveled to update the estimate of an error state in Kalman filter 306.

In one embodiment, where the distance traveled is calculated using a gait model, navigation processor 302 transmits a navigation solution and motion information received from IMU 308 to a gait classification model 304. Distance estimation system 100 receives data from gait classification module 304 that aids distance estimation system 100 in calculating the distance traveled. Gait classification module 304 includes a gait model library 310, a gait estimator 314, and a frequency estimator 312.

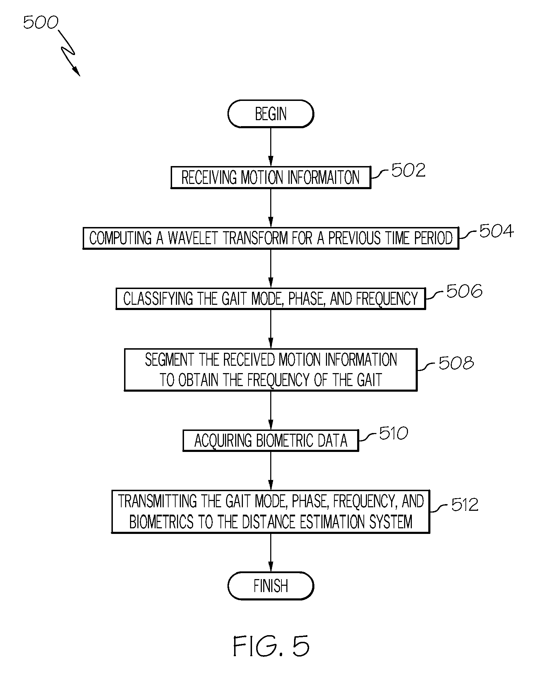

Figure 5 is a flowchart of exemplary method 500 for classifying the gait mode based on information received from IMU 308 and navigation processor 302. The method begins at step 502 with gait classification module 304 receiving motion information. For example, gait classification module 304 receives a navigation solution from navigation processor 302 and motion information transmitted by IMU 306. Also, classification module 304 receives motion information associated with a period of time. For example, gait classification module 304 receives motion information gathered during the previous two seconds. After gait classification module 304 receives the motion information, method 500 proceeds at step 504 with gait classification module 304 computing a wavelet transform for a previous time period. For example, gait estimator 314 computes a wavelet transform for several periods of time depending on the wavelet transform stored in gait model library 310. In certain embodiments, where the time period is one second, gait estimator 314 computes a wavelet transform for the previous five one second periods.

After gait classification module 304 calculates a wavelet transform for a previous time period, method 500 proceeds at 506 with gait classification module classifying the gait mode, phase, and frequency. For example, gait estimator 314 compares the information derived from the wavelet transform against information stored in gait model library 310. Gait estimator 314 classifies the gait mode by computing the wavelet transform on the motion information received from IMU 308. When the gait mode is classified, frequency estimator 312 identifies a phase and frequency estimate for the current IMU data. If gait estimator 314 is unable to identify a gait, gait estimator 314 fails to identify a gait mode for the received information and gait classification module 304 will wait to receive additional motion information.

If gait estimator 314 identifies the gait, method 500 proceeds at 508 with gait classification module 304 segmenting the received motion information to obtain the frequency of the gait. Knowledge of the specific frequency of a measured step increases the accuracy of the distance measurement. For example, frequency estimator 312 computes the frequency of the received signal using an FFT or other method to calculate the frequency. The frequency calculation provides an initial resolution estimate of the gait frequency, which is subsequently refined using the time-difference of critical points for the current step. To further create a more accurate gait model, method 500 proceeds at step 510 with gait classification module 304 acquiring biometric data about a particular user of personal navigation system 300. For example, gait classification module 304 receives biometric information from a user, or receives stored biometric information. The addition of the biometric data into the model allows for the creation of gait models that describe the gait motions of a plurality of users.

After gathering the biometric data, method 500 proceeds at 512 with gait classification module 304 transmitting the gait mode, phase, frequency, and biometrics to distance estimation system 100. Distance estimation system 100 then calculates the distance traveled and transmits the distance traveled to Kalman filter 306. Alternatively, distance estimation system 100 combines the distance traveled with a heading direction and then transmits the distance traveled along with the heading information to Kalman filter 306 as a delta position update. Kalman filter 306 uses the distance traveled to correct errors that occur during the operation of IMU 308.

Although the system described above is a personal navigation system used to calculate a navigation solution, distance calculation module 106 can be implemented in other systems. For example, in other embodiments, distance calculation module 106 is implemented in a health and behavior monitoring system. In particular, within the medical field it is important to understand and develop models for how people move. Such models can benefit a wide variety of tasks such as detection and monitoring of physical disorders, as well as evaluating early childhood locomotion. For example, by quantifying each child's motion over time using a system such as distance estimation system 100, it can be determined how much time each child in a group of children spends in different crawling modes, as well as walking modes. Such data could be used to increase our understanding of early childhood development, allowing researchers to study factors which impact physical development and/or physical disorders.

Several means are available to implement the systems and methods of the current invention as discussed in this specification. These means include, but are not limited to, digital computer systems, microprocessors, general purpose computers, programmable controllers and field programmable gate arrays (FPGAs) or application-specific integrated circuits (ASICs). Therefore other embodiments of the present invention are program instructions resident on computer readable media which when implemented by such means enable them to implement embodiments of the present invention. Computer readable media include any form of a physical computer memory storage device. Examples of such a physical computer memory device include, but is not limited to, punch cards, magnetic disks or tapes, optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL).

This description is presented for purposes of illustration, and is not intended to be exhaustive or limited to the embodiments disclosed. Variations and modifications may occur, which fall within the scope of the following claims. For example, the embodiments above relate to a personal navigation system, but it is understood that any variation or species of system using a distance estimate can utilize the described invention. Furthermore, some of the components described below may be implemented using either digital or analog circuitry, or a combination of both.

**Claims**

1.   A distance estimation system (100), the system comprising:

a gait information memory (107) configured to store gait information about a gait mode;
a biometric data memory (150) configured to store a biometric profile for a user;
a frequency module (110) configured to identify a gait frequency; and
a distance calculation module (106) configured to calculate the distance traveled by the user by creating a distance estimate model based on the gait mode, the biometric profile, and the gait frequency, wherein the distance calculation module (106) creates the distance estimate model by performing a regression analysis on movement information from at least one user.

2.   The system of claim 1, further comprising:

an inertial measurement unit (112) configured to sense motion of a user and to output to the frequency module (110) one or more channels of inertial motion data corresponding to the sensed motion; and
a Kalman filter (306) configured to provide correction information for the inertial measurement unit (112).

3.   The system of claim 2, further comprising at least one aiding sensor providing an output to the frequency module, including at least one of:

a GPS antenna (322) configured to output position updates;
a magnetometer (318) configured to provide true north orientation of the sensor package;
or
an altimeter (320).

4.   The system of claim 2, wherein the distance calculation module (106) transmits the distance traveled to the Kalman filter (306), wherein the Kalman filter (306) uses the distance traveled to estimate the correction information.

5.   The system of claim 1, further comprising a gait classification module (304) configured to determine the gait mode for the user.

6.   The system of claim 5, wherein the gait classification module (304) is configured to:

calculate a coefficient vector for motion information received from an inertial measurement unit (308) based on a wavelet transformation of the motion information; and
select one of a plurality of gaits as the gait mode based on the coefficient vector and on a plurality of gait models, wherein each gait model corresponds to one of a plurality of gaits.

7.   The system of claim 1, wherein the regression analysis comprises at least one of:

a global regression method; and
a local regression method.

8.   The system of claim 1, wherein the biometric data comprises at least one of:

a user's height;
a user's arm length;
a user's gender;
a user's thigh length;
a user's weight; and

a user's leg length.

9. A system for providing personal navigation, the system comprising:

an inertial measurement unit (308) configured to sense motion of an individual and to output one or more channels of inertial motion data corresponding to sensed motion;
a Kalman filter (306) configured to correct errors that arise during operation of the inertial measurement unit (308);
a gait classification module (304) configured to identify a gait executed by the individual based on the inertial motion data received from the one or more channels;
a frequency module (110) configured to identify a frequency for the gait executed by the individual based on the inertial motion data received from the one or more channels; and
a distance estimation module (106) configured to
create a distance estimate model by applying a regression analysis to training data gathered from a plurality of users, where the distance estimate model describes the motion of the plurality of users;
estimate a distance traveled by an individual based on the distance estimate model, the gait, and the frequency; and
transmit the distance traveled to the Kalman filter (306) to update the Kalman filter (306).

10. The system of claim 17, wherein the gait classification module (304) is configured to:

calculate a coefficient vector for motion information received from the inertial measurement unit (308) based on a wavelet transformation of the motion information; and
select one of a plurality of gaits as the gait mode based on the coefficient vector and on a plurality of gait models, wherein each gait model corresponds to one of a plurality of gaits.

FIG. 1A

FIG. 1B

*200*

```
        ┌─────────────┐
        │    BEGIN     │
        └──────┬──────┘
               │
               ▼
   ┌──────────────────────────────┐
   │ EXECUTING A GAIT AT A SPECIFIED │ ─ 202
   │    APPROXIMATE FREQUENCY      │
   └──────────────┬───────────────┘
                  │
                  ▼
 ┌────────────────────────────────────────┐
 │ RECORDING MOVEMENT INFORMATION WHILE RECORDING │ ─ 204
 │ POSITION INFORMATION RELATIVE TO A FIXED SURVEY POINT │
 └──────────────────┬─────────────────────┘
                    │
                    ▼
  ┌──────────────────────────────────────┐
  │ ALIGNING THE MOVEMENT INFORMATION AND THE │ ─ 206
  │ POSITION INFORMATION WITH RESPECT TO TIME │
  └────────────────┬─────────────────────┘
                   │
                   ▼
   ┌─────────────────────────────────┐
   │ SEGMENTING THE MOVEMENT INFORMATION │ ─ 208
   │    INTO IDENTIFIABLE MOVEMENTS     │
   └──────────────┬──────────────────┘
                  │
                  ▼
  ┌──────────────────────────────────────┐
  │ STORING THE FREQUENCY, GAIT, AND DISTANCE │ ─ 210
  │ TRAVELLED FOR THE IDENTIFIABLE MOVEMENTS. │
  └────────────────┬─────────────────────┘
                   │
                   ▼
           ┌─────────────┐
           │    FINISH    │
           └─────────────┘
```

FIG. 2

PERSONAL NAVIGATION SYSTEM
*300*

AIDING SENSORS
(OPTIONAL)
316

MAGNETIC
SENSORS
318

ALTIMETER
320

GPS
322

DISTANCE ESTIMATION
SYSTEM
100

STRAPDOWN
NAVIGATOR
302

KALMAN FILTER    IMU

306              308

GAIT CLASSIFICATION MODULE
304

GAIT MODEL
LIBRARY

GAIT
ESTIMATOR

FREQUENCY
ESTIMATOR

310          314          312

FIG. 3

*400*

BEGIN

RECEIVING MEASUREMENTS FROM AN IMU — *402*

CALCULATING A POSE ESTIMATES — *404*

RECEIVING A DISTANCE TRAVELED AND COVARIANCE FROM A DISTANCE ESTIMATION SYSTEM — *406*

VALIDATING THE DISTANCE TRAVELED — *408*

IF DISTANCE TRAVELED ESTIMATE IS VALID, UPDATING THE KALMAN FILTER — *410*

FINISH

FIG. 4

500

BEGIN

RECEIVING MOTION INFORMAITON — 502

COMPUTING A WAVELET TRANSFORM FOR A PREVIOUS TIME PERIOD — 504

CLASSIFYING THE GAIT MODE, PHASE, AND FREQUENCY — 506

SEGMENT THE RECEIVED MOTION INFORMATION
TO OBTAIN THE FREQUENCY OF THE GAIT — 508

ACQUIRING BIOMETRIC DATA — 510

TRANSMITTING THE GAIT MODE, PHASE, FREQUENCY, AND
BIOMETRICS TO THE DISTANCE ESTIMATION SYSTEM — 512

FINISH

FIG. 5

FIG. 6

EP 2 458 329 A2

FIG.7

**EP 2 458 329 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 90031510 A